# EUROPÄISCHE PATENTSCHRIFT

(11) **EP 0 704 660 B1**
(45) Veröffentlichungstag und Bekanntmachung des Hinweises auf die Patenterteilung: **05.04.2000**
(21) Anmeldenummer: 95113649.8
(22) Anmeldetag: 31.08.1995
(51) Int. Cl.: F24J 2/48, C25F 3/04

(54) **Strahlungsemfänger**
Radiationreceiver
Récepteur de rayonnement

(30) Priorität: 28.09.1994 DE 4434556
(43) Veröffentlichungstag der Anmeldung: 03.04.1996
(73) Patentinhaber: Becromal S.p.A., I-20089 Quinto de' Stampi Rozzano (MI) (IT)
(72) Erfinder: Chiavarotti, Giovanni, c/o Keil & Schaafhausen, D-60322 Frankfurt am Main (DE); Di Quarto, Francesco, c/o Keil & Schaafhausen, D-60322 Frankfurt am Main (DE); Piazza, Salvatore, c/o Keil & Schaafhausen, D-60322 Frankfurt am Main (DE); Sunseri, Carmelo, c/o Keil & Schaafhausen, D-60322 Frankfurt am Main (DE)
(74) Vertreter: KEIL & SCHAAFHAUSEN

(56) Entgegenhaltungen:
- FR-A- 2 345 675
- FR-A- 2 506 440
- US-A- 4 440 606
- PATENT ABSTRACTS OF JAPAN vol. 8, no. 35 (M-276), 15.Februar 1984 & JP 58 190651 A (SHIYOUWA ARUMINIUMU KK), 7.November 1983,
- PATENT ABSTRACTS OF JAPAN vol. 4, no. 22 (C-74), 23.Februar 1980 & JP 54 160528 A (AGENCY OF IND SCIENCE AND TECHNOL.), 19.Dezember 1979,

## Beschreibung

Die Erfindung betrifft einen Strahlungsempfänger gemäß dem Oberbegriff des Anspruchs 1.

Als Strahlungsempfänger sollen Elemente verstanden werden, die auf elektromagnetische Strahlung ansprechen und diese in Wärmeenergie umsetzen, insbesondere zur Verwendung in Solarkollektoranlagen.

Beispiele derartiger Strahlungsempfänger sind u. a. Bolometer, Thermoelemente und dgl. Ein Problem bei Solarkollektoren bzw. Strahlungsempfängern besteht darin, das Absorptionsvermögen der mit der elektromagnetischen Strahlung beaufschlagten Fläche dem Wert 1 anzunähern. Solche Körper, die das Absorptionsvermögen 1 besitzen, die also alle auffallende Strahlung absorbieren und vollständig in Wärme verwandeln, werden auch als schwarze Körper bezeichnet. Schwarze Körper bzw. schwarze Strahler werden in der Praxis durch einen Hohlraum mit einer kleinen Öffnung gebildet, wobei die Wandungen des Hohlraums für elektromagnetische Strahlung aller Wellenlängen undurchlässig sind, so daß sich im Hohlraum ein Strahlungsgleichgewicht ausbildet. Derartige schwarze Körper sind jedoch für die Verwendung als Solarkollektoren ungeeignet.

Aus der FR-A-2 506 440 ist ein selektiver Absorber von Solarenergie als ein Substrat aus Aluminium oder einer Aluminiumlegierung bekannt, bei welchem durch elektrolytisches Ätzen bei Verwendung von Wechselstrom eine fein abgeschliffene Oberfläche mit Graten und Aushöhlungen erzielt werden soll. Durch nachfolgenden Gebrauch von Metallsalzbädern soll die Oberfläche mit einer geschwärzten Schicht überzogen werden, bspw. durch Anodisierung mit einem Wechselstrom, Bildung einer Oxidschicht oder chemischer Einfärbung und Metallisation. Als Substrat werden massive Aluminiumplatten vorgeschlagen.

Der Erfindung liegt demgegenüber die Aufgabe zugrunde, eine zur Verwendung als Strahlungsempfänger geeigneteres Aluminiumsubstrat anzugeben.

Diese Aufgabe wird mit den Merkmalen des Anspruchs 1 gelöst. Während die geschwärzte Seite der Aluminiumfolie der Sonnenstrahlung auszusetzen ist und aufgrund des hohen Absorptionsvermögens einen großen Wirkungsgrad aufweist, kann die erzeugte Wärmeenergie auf der ungeschwärzten Seite der Aluminiumfolie durch geeignete Mittel aufgenommen und weiter- bzw. abgeleitet werden.

In einer vorteilhaften Weiterbildung der Erfindung stellt man die Schwärzung durch elektrochemisches Oberflächenätzen in einer Chloridlösung her.

Es hat sich als vorteilhaft herausgestellt, daß man der Chloridlösung als Komponenten organische und/oder anorganische Säuren und/oder deren Aluminiumsalze zusetzt. Bevorzugt werden eine oder mehrere Säuren der folgenden Gruppe: Phosphorsäure, Salpetersäure, Oxalsäure, Weinsäure, Zitronensäure.

Von Vorteil führt man das Oberflächenätzen bei Lösungstemperaturen im Bereich zwischen etwa 20° C und etwa 60° C durch.

Die Schwärzung durch Oberflächenätzen wird vorteilhaft unter Anlegen von Gleichstrom und/oder Wechselstrom unterschiedlicher Frequenz und/oder Strompulsen mit unterschiedlichem Tastverhältnis durchgeführt.

In der Praxis haben sich dabei Ströme einer mittleren Stromdichte im Bereich zwischen etwa 0,06 A/cm² als vorteilhaft erwiesen.

Nach einem weiteren Merkmal der Erfindung verwendet man Aluminiumfolien einer Dicke im Bereich zwischen etwa 15 µm und 300 µm.

Die Mittel zur Aufnahme und Weiterleitung der absorbierten Energie sind auf der ungeschwärzten Seite der Aluminiumfolie angebracht.

Weitere Ziele, Merkmale, Vorteile und Anwendungsmöglichkeiten der Erfindung ergeben sich aus der nachfolgenden Beschreibung eines Ausführungsbeispiels. Dabei bilden alle beschriebenen Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Eine Aluminiumfolie einer Dicke im Bereich zwischen 15 µm und 300 µm wird einseitig durch elektrochemisches Ätzen geschwärzt. Zum elektrochemichen Ätzen wird die Aluminiumfolie einseitig mit einer Lösung in Berührung gebracht, die Chlorid und verschiedenartige Zusätze organischer oder anorganischer Säuren enthält. Hierbei kommen bevorzugt Phosphorsäure, Salpetersäure, Oxalsäure, Weinsäure, Zitronensäure und Aluminium- bzw. Tonerdesalze zur Anwendung. Die Lösung weist während des Ätzvorganges Temperaturen im Bereich zwischen 20° C und etwa 60° C auf. Das Ätzen wird unter der Einwirkung von Strom durchgeführt, wobei Gleichstrom, gepulster Strom, Wechselstrom bzw. eine Kombination hiervon zur Anwendung gelangt. Auch kann die Frequenz des Wechselstroms bzw. das Tastverhältnis der Strompulse unterschiedlich eingestellt werden. Typische Werte der Stromdichte des einwirkenden Stromes liegen im Bereich zwischen 0,06 A/cm² bis 1,8 A/cm².

Mittels des elektrochemischen Ätzens wird die Aluminiumfolie einseitig solange geschwärzt, bis das Absorptionsvermögen dem Adsorptionsvermögen eines schwarzen Körpers weitgehend angenähert ist. Durch diese Maßnahmen wird somit ein äußerst hoher Wirkungsgrad in der Umwandlung von Sonnenenergie in Wärmeenergie erzielt. Auf der ungeschwärzten Seite der Aluminiumfolie bringt man Mittel zur Aufnahme und Weiterleitung der absorbierten Energie an. Bei derartigen Mitteln kann es sich beispielsweise um Materialien hoher Wärmeleit- und/oder Speicherkapazität oder auch um fluide Medien handeln, deren Temperatur mittels der Wärmeenergie erhöht wird, so daß die Wärmeenergie ggf. abgeführt werden kann.

## Patentansprüche

1. Strahlungsempfänger zur Absorption von Sonnenenergie und Umwandlung in Wärmeenergie, bspw. für Solarkollektoren, mit einer vorzugsweise in Annäherung an einen schwarzen Körper geschwärzten Oberfläche eines Aluminiumsubstrats, **dadurch gekennzeichnet**, dass das Aluminiumsubstrat als Aluminiumfolie ausgebildet ist, von welcher nur eine Seite durch einseitiges Oberflächenätzen geschwärzt worden ist.

2. Strahlungsempfänger nach Anspruch 1, **dadurch gekennzeichnet**, dass die Schwärzung durch elektrochemisches Oberflächenätzen in einer Chloridlösung hergestellt worden ist.

3. Strahlungsempfänger nach Anspruch 1 oder 2, **dadurch gekennzeichnet**, dass der Chloridlösung als Komponenten organische und/oder anorganische Säuren und/oder deren Aluminiumsalze zugesetzt worden ist, bevorzugt eine oder mehrere Säuren der folgenden Gruppe: Phosphorsäure, Salpetersäure, Oxalsäure, Weinsäure, Zitronensäure.

4. Strahlungsempfänger nach einem der Ansprüche 1 bis 3, **dadurch gekennzeichnet**, dass das Oberflächenätzen bei Lösungstemperaturen im Bereich zwischen etwa 20° C und etwa 60° C durchgeführt worden ist.

5. Strahlungsempfänger nach einem der Ansprüche 1 bis 4, **dadurch gekennzeichnet**, dass das Oberflächenätzen unter Anlegen von Gleichstrom und/oder Wechselstrom unterschiedlicher Frequenz und/oder Strompulsen mit unterschiedlichem Tastverhältnis durchgeführt worden ist.

6. Strahlungsempfänger nach einem der Ansprüche 2 bis 5, **dadurch gekennzeichnet**, dass Ströme einer mittleren Stromdichte im Bereich zwischen etwa 0,06 A/cm² und 1,8 A/cm² verwendet worden sind.

7. Strahlungsempfänger nach einem der vorhergehenden Ansprüche, **dadurch gekennzeichnet**, dass die Aluminiumfolie eine Dicke im Bereich zwischen etwa 15 um und 300 µm hat.

8. Strahlungsempfänger nach einem der vorhergehenden Ansprüche, **dadurch gekennzeichnet**, dass auf der ungeschwärzten Seite der Aluminiumfolie Mittel zur Aufnahme und ggf. Weiterleitung der absorbierten Energie angebracht sind.

## Claims

1. Radiation receiver to absorb solar energy and convert this into heat energy, for example for solar collectors, with a surface of an aluminium substrate blackened preferably to a state close to that of a black body, characterised in that the aluminium substrate is formed as an aluminium foil, only one side of which is blackened by a unilateral surface etching.

2. Radiation receiver according to claim 1, characterised in that the blackening is produced by electrochemical surface etching in a chloride solution.

3. Radiation receiver according to claim 1 or claim 2, characterised in that added to the chloride solution as components are organic and/or anorganic acids and/or their aluminium salts, preferably one or more acids of the following group: phosphoric acid, nitric acid, oxalic acid, tartaric acid, citric acid.

4. Radiation receiver according to any of claims 1 to 3, characterised in that the surface etching is carried out at solution temperatures in the range between approximately 20°C and approximately 60°C.

5. Radiation receiver according to any of claims 1 to 4, characterised in that the surface etching is carried out by application of direct current and/or alternating current of different frequencies and/or current pulses with different pulse-width repetition rates.

6. Radiation receiver according to any of claims 2 to 5, characterised in that currents of a mean current density in the range between approximately 0.06 A/cm² and 1.8 A/cm² are used.

7. Radiation receiver according to any of the previous claims, characterised in that the aluminium foil has a thickness in the range between approximately 15 µm and 300 µm.

8. Radiation receiver according to any of the previous claims, characterised in that on the non-blackened side of the aluminium foil are applied means for absorbing and where applicable transferring the energy absorbed.

## Revendications

1. Récepteur de rayonnement destiné à absorber de l'énergie solaire et à la transformer en énergie calorifique, par exemple pour des capteurs solaires, équipé d'une surface en un substrat d'aluminium noircie de préférence par approche contre un corps noir, caractérisé en ce que le substrat d'aluminium est conçu en tant que feuille d'aluminium dont seule une face a été noircie par attaque de surface unilatérale.

2. Récepteur de rayonnement selon la revendication 1, caractérisé en ce que le noircissement a été réalisé par attaque de surface électrochimique dans une solution de chlorure.

3. Récepteur de rayonnement selon la revendication 1 ou 2, caractérisé en ce que la solution de chlorure a été ajoutée sous la forme de composants d'acides organiques et/ou inorganiques et/ou de leurs sels d'aluminium, en utilisant de préférence un ou plusieurs acides des groupes suivants: acide phosphorique, acide nitrique, acide oxalique, acide tartrique et acide citrique.

4. Récepteur de rayonnement selon l'une des revendications 1 à 3, caractérisé en ce que l'attaque de surface a été réalisé avec des températures de solution comprises dans la gamme allant d'environ 20 °C à environ 60 °C.

5. Récepteur de rayonnement selon l'une des revendications 1 à 4, caractérisé en ce que l'attaque de surface a été réalisée en appliquant un courant continu et/ou un courant alternatif de fréquence différente et/ou avec des impulsions de courant présentant un taux d'impulsions différent.

6. Récepteur de rayonnement selon l'une des revendications 2 à 5, caractérisé en ce que l'on a utilisé des courants présentant des densités moyennes de courant comprises dans la gamme allant d'environ 0,06 A/cm² à 1,8 A/cm².

7. Récepteur de rayonnement selon l'une des revendications précédentes, caractérisé en ce que la feuille d'aluminium possède une épaisseur comprise dans la gamme allant d'environ 15 µm à 300 µm.

8. Récepteur de rayonnement selon l'une des revendications précédentes, caractérisé en ce que sont appliqués sur la face non noircie de la feuille d'aluminium des moyens permettant de capter et éventuellement de transmettre l'énergie absorbée.
